# EUROPEAN PATENT SPECIFICATION

(11) **EP 3 604 105 B1**
(45) Date of publication and mention of the grant of the patent: **31.03.2021**
(21) Application number: 19188735.5
(22) Date of filing: 29.07.2019
(51) Int. Cl.: B62K 25/00, B62M 6/65, B62M 9/06, B62M 17/00

(54) **A BICYCLE WITH AN ELECTRIC MOTOR AND A DRIVE UNIT OF THE BICYCLE**
FAHRRAD MIT EINEM ELEKTROMOTOR UND ANTRIEBSEINHEIT DES FAHRRADES
BICYCLETTE DOTÉE D'UN MOTEUR ÉLECTRIQUE ET UNITÉ D'ENTRAÎNEMENT DE LA BICYCLETTE

(30) Priority: 30.07.2018 JP 2018142327
(43) Date of publication of application: 05.02.2020
(73) Proprietor: YAMAHA HATSUDOKI KABUSHIKI KAISHA, Iwata-shi, Shizuoka 438-8501 (JP)
(72) Inventor: TERADA, Junji, Iwata-shi, Shizuoka 438-8501 (JP); NAITO, Shinya, Iwata-shi, Shizuoka 438-8501 (JP); FUJISHIRO, Masaya, Iwata-shi, Shizuoka 438-8501 (JP); KANNO, Nobuyuki, Iwata-shi, Shizuoka 438-8501 (JP)
(74) Representative: Grünecker Patent- und Rechtsanwälte PartG mbB

(56) References cited:
- CN-U- 206 664 846
- CN-Y- 2 628 411
- CN-Y- 201 183 586

## Description

The present invention relates to a bicycle with an electric motor and a drive unit according to the preamble of independent claim 1. Such a drive unit can be taken from the prior art document CN 2 628411 Y.

JP2014-240267A discloses a bicycle having a crank, to which pedals are attached, and an electric motor, and capable of being driven by human power and an electric motor. The electric motor is disposed in the rear hub, and the rotor of the electric motor and the rear hub are fixed to each other so as to integrally rotate. A sprocket is disposed on the rear wheel axle, and coupled to the crank through the chain. The sprocket and the rear hub are also fixed to each other so as to integrally rotate.

In the bicycle of JP2014-240267A mentioned above, the opposite ends of the rear wheel axle in the lateral direction are supported by the rear arms. In other words, the rear arms are disposed right and left of the rear wheel. As such, the rear arms may obstruct the maintenance operation of the electric motor.

It is an object of the present invention to provide a drive unit as indicated above that can improve workability of maintenance operation of a bicycle and the drive unit capable of being driven by human power and an electric motor. According to the present invention said object is solved by a drive unit having the features of independent claim 1. Preferred embodiments are laid down in the dependent claims.

### BRIEF DESCRIPTION OF THE DRAWINGS

FIG. 1 is a side view of an example of a bicycle proposed in this disclosure;
FIG. 2 is a block diagram showing a configuration of the exampled bicycle;
FIG. 3 is a perspective view of a drive unit of the exampled bicycle;
FIG. 4 is a perspective view of the drive unit of the exampled bicycle. In FIG. 4, an electric motor is detached from the drive unit, and the auxiliary housing is disassembled;
FIG. 5 is a cross sectional view of the drive unit taken along the line V-V in FIG. 1;
FIG. 6 is an enlarged view of FIG. 5;
FIG. 7 is a cross sectional view of the drive unit taken along the line VII-VII in FIG. 1;
FIG. 8 is a cross sectional view of the drive unit taken along the line VIII-VIII in FIG. 1;
FIG. 9 is a side view of the drive unit including a chain as a power transmission mechanism; and
FIG. 10 is a cross sectional view of the drive unit taken along the line X-X in FIG. 9.

### DETAILED DESCRIPTION OF THE INVENTION

Examples of a bicycle and a drive unit proposed in this disclosure will be described. The terminology used herein is for the purpose of describing particular embodiments only and is not intended to be limiting of the invention. As used herein, the term "and/or" includes any and all combinations of one or more of the associated listed items. As used herein, the singular forms "a," "an," and "the" are intended to include the plural forms as well as the singular forms, unless the context clearly indicates otherwise. It will be further understood that the terms "comprises", "comprising", "includes", and/or "including", when used in this specification, specify the presence of stated features, steps, operations, elements, and/or components, but do not preclude the presence or addition of one or more other features, steps, operations, elements, components, and/or groups thereof.

Unless otherwise defined, all terms (including technical and scientific terms) used herein have the same meaning as commonly understood by one having ordinary skill in the art to which this invention belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of technologies are disclosed. Each of these has individual benefit and each can also be used in conjunction with one or more, or in some cases all, of the other disclosed technologies. Accordingly, for the sake of clarity, this description will refrain from repeating every possible combination of the individual technologies in an unnecessary fashion. Nevertheless, the specification and claims should be read with the understanding that such combinations are entirely within the scope of the invention and the claims.

In the following description, for purposes of explanation, numerous specific details are set forth in order to provide a thorough understanding of the present invention. It will be evident, however, to one skilled in the art that the present invention may be practiced without these specific details.

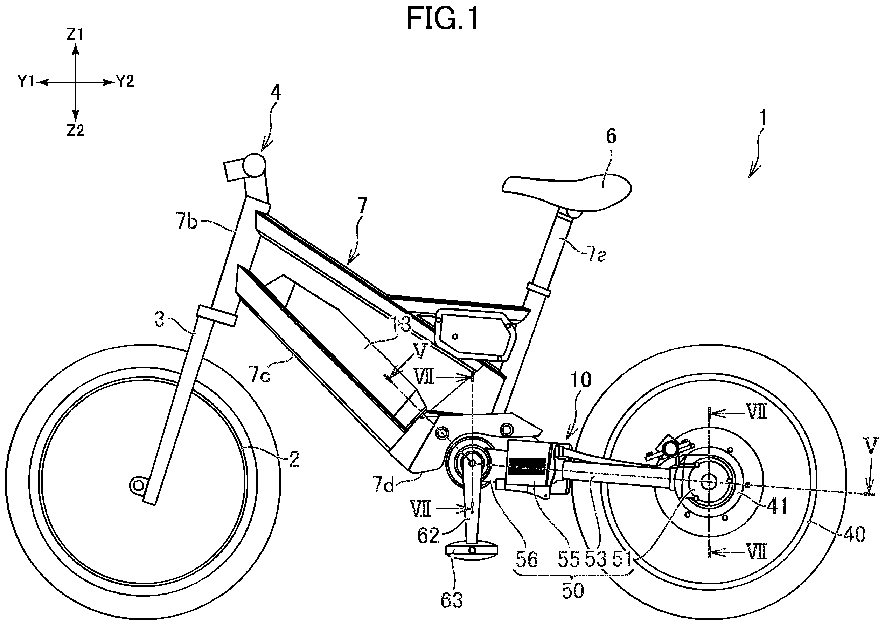

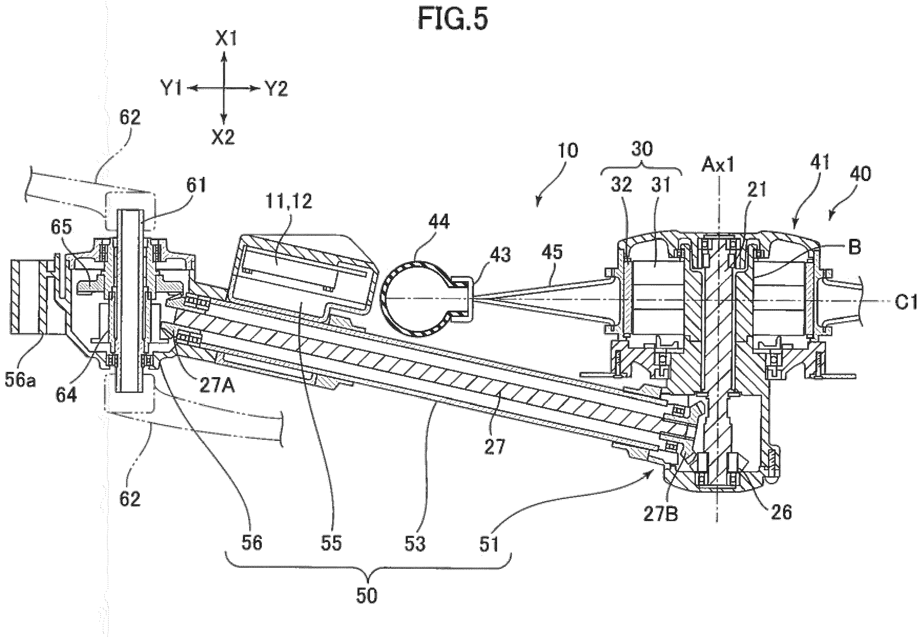

The present disclosure is to be considered as an exemplification of the invention, and is not intended to limit the invention to the specific embodiments illustrated by the figures or description below. As an example, a bicycle 1 and a drive unit 10 shown in the drawings such as FIG. 1 will be described herein. In FIG. 1, arrows Y1 and Y2 respectively indicate forward and rearward directions, and arrows Z1 and Z2 respectively indicate upward and downward directions. In FIG. 5, arrows X1 and X2 respectively indicate rightward and leftward directions, and a direction indicated by arrows X1-X2 is referred to as a left-right direction or an axial direction.

### [Vehicle]

As shown in FIG. 1, the bicycle 1 includes a front fork 3, a front wheel 2 held at the lower edge of the front fork 3, and a handle bar 4 connected to the front fork 3 through the steering shaft. The bicycle 1 includes a seat 6 at a position rearwardly apart from the handle bar 4. The seat 6 is fixed at the upper edge of a seat post 7a.

A crank 60 is disposed below the seat post 7a. The crank 60 includes a crank shaft 61 (see FIG. 5), crank arms 62 attached to the opposite ends of the crank shaft 61, and pedals 63 attached to the crank arms 62.

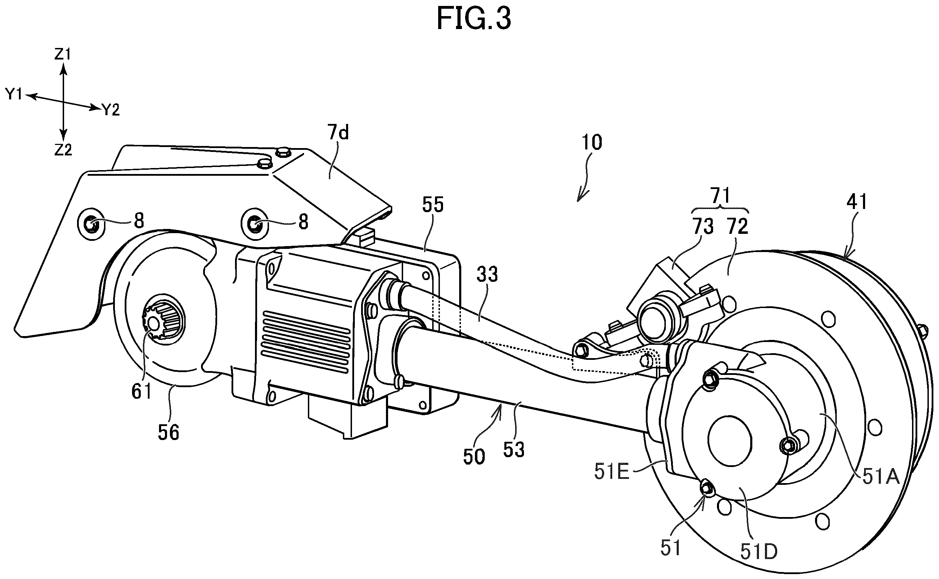

The vehicle frame 7 includes the seat post 7a, a head pipe 7b supporting the steering shaft, and a down frame 7c obliquely extending from the head pipe 7b downward. The lower end of the seat post 7a and the lower end of the down frame 7c are fixed to a bracket 7d. The drive unit 10 (see FIG. 3) of the bicycle 1 includes a front housing 56, which is located at the forefront part of a rear arm 50 described later and holds the crank 60. The front housing 56 is coupled to the bracket 7d. The bicycle 1 includes a battery 13 for storing power to be supplied to an electric motor 30 described later. The battery 13 is attached to, for example, the down frame 7c. The structure of the vehicle frame 7, the supporting structure of the front housing 56, and the location of the battery 13 are not limited to the above described examples.

### [Three drive modes]

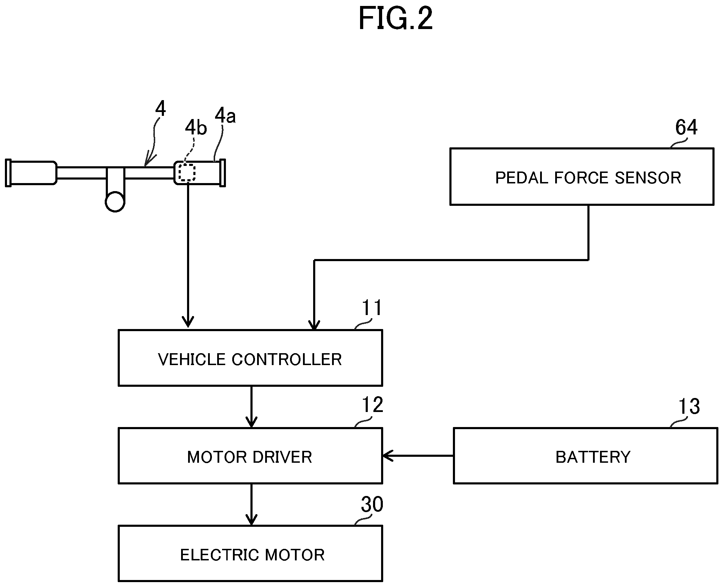

As shown in FIG. 2, an accelerator grip 4a is provided at the right part of the handle bar 4. The accelerator grip 4a includes an accelerator sensor 4b for detecting an amount of operation (rotational position) of the accelerator grip 4a. The bicycle 1 includes a rear wheel 40 and an electric motor 30 (see FIG. 5) attached to the rear wheel 40. An output signal of the accelerator sensor 4b is fed into a vehicle controller 11. The vehicle controller 11 generates an instruction value according to an operation amount of the accelerator grip 4a. The motor driver 12 supplies the electric motor 30 with power according to the instruction value. The motor driver 12 includes an inverter that converts DC power from the battery 13 into AC power of a frequency according to the instruction value, for example, and then supplies the converted power to the electric motor 30. At this time, the bicycle 1 can be driven only by the power from the electric motor 30.

The rotational force of the crank shaft 61 (see FIG. 5) is transmitted to the rear wheel 40 through a power transmission mechanism described later. The crank shaft 61 includes a sensor 64 (see FIG. 5) that detects force (pedal force) applied by a user to the pedals 63 (hereinafter, sensor 64 is referred to as "pedal force sensor"). The pedal force sensor 64 is a sensor (e.g., magnetorestrictive sensor) that outputs, for example, a signal according to torsion of the crank shaft 61. As shown in FIG. 2, an output signal of the pedal force sensor 64 is fed into the vehicle controller 11. The vehicle controller 11 generates an instruction value according to the pedal force. The motor driver 12 supplies the electric motor 30 with power according to the instruction value, and the electric motor 30 is driven with the supplied power. With the electric motor 30 being driven in this way, a user's pedaling of the pedals 63 is assisted. When the electric motor 30 is not operating, the rear wheel 40 drives only by the rotational force from the crank shaft 61 through the power transmission mechanism.

Briefly, the bicycle 1 can be driven in the following three modes: (i) Electric mode (driven only by power of the electric motor 30); (ii) Assisted mode (driven by the electric motor 30 and pedal force applied to the pedals 63; and (iii) Human-powered mode (driven only by pedal force applied to the pedals 63). The bicycle 1 may have a switch for a user to switch these three modes.

The structure and the operations proposed in this disclosure are not limited to be applied to the bicycle that can select these three modes, but may also be applied to a bicycle that can select only (ii) assisted mode and (iii) human-powered mode, for example. In this case, the bicycle may not include the accelerator grip 4a and the accelerator sensor 4b.

### [Drive unit]

In the following, the structure of the drive unit 10 will be described. The drive unit 10 includes two power systems. A first power system includes the electric motor 30, and transmits rotation of a rotor 32 included in the electric motor 30 to a hub 41 of the rear wheel 40. A second power system includes the crank shaft 61 to which the pedals 63 are attached, and transmits rotation of the crank shaft 61 to the hub 41 of the rear wheel 40.

### [First power system]

As shown in FIG. 5, the electric motor 30 includes a stator 31 and a rotor 32. The stator 31 includes a plurality of iron cores, which are arranged in a circular manner around the rotation center Ax1 of the rear wheel 40, and coils wound around the iron cores. The rotor 32 includes a plurality of magnets arranged in a circular manner around the rotation center Ax1 of the rear wheel 40, and is rotatable around the rotation center Ax1. The rotor 32 of the bicycle 1 is located radially outward of the stator 31, and radially opposed to the stator 31. That is, the electric motor 30 is a radial gap electric motor. Unlike the example of the bicycle 1, the electric motor 30 may be an axial gap electric motor. In other words, the rotor 32 and the stator 31 may be opposed to each other in the axial direction (the direction of the rotation center Ax1).

As shown in FIG. 5, the rear wheel 40 includes a rim 43 to which a tire 44 is attached, and the hub 41. The rear wheel 40 also includes a spoke 45 radially extending from the hub 41 and supporting the rim 43. The rotor (magnet) 32 is fixed to the inner surface of the rear hub 41, and the rotor 32 rotates integrally with the rear hub 41. There is no speed reducer (for example, gears) between the rear hub 41 and the electric motor 30, and thus the rear wheel 40 can be effectively driven without power losses due to the speed reducer.

### [Second power system]

As described above, the front part of the drive unit 10 includes the crank shaft 61 to which the pedals 63 are attached. As shown in FIG. 5, a gear 65 (bevel gear in the exampled bicycle 1), which integrally rotates with the crank shaft 61, and the pedal force sensor 64 described above are disposed on the crank shaft 61. A power transmission path (second power system) through which power (rotation) of the crank shaft 61 is transmitted to the rear hub 41 includes a transmission shaft 21 disposed apart from the crank shaft 61 rearward. The transmission shaft 21 is located at the rotation center Ax1 of the rear wheel 40. As described later, the rear part of the rear arm 50 includes an arm rear part 51, and the transmission shaft 21 is rotatably supported by the arm rear part 51.

The second power system includes the power transmission mechanism for transmitting the power (rotational force) of the crank shaft 61 to the transmission shaft 21. In the exampled drive unit 10, the power transmission mechanism is a shaft drive mechanism. That is, as shown in FIG. 5, the power transmission mechanism includes the gear 65 provided on the crank shaft 61, a gear 26 (specifically, bevel gear) provided on the transmission shaft 21, and a transmission shaft 27 arranged in the front-rear direction of the vehicle body when viewed from the side of the vehicle (in the following, the transmission shaft 21 is referred to as "first transmission shaft", and the transmission shaft 27 is referred to as "second transmission shaft"). The front end of the second transmission shaft 27 includes a gear 27A (specifically, bevel gear) that is engaged with the gear 65 on the crank shaft 61. The rear end of the second transmission shaft 27 includes a gear 27B (specifically, bevel gear) that is engaged with the gear 26 on the first transmission shaft 21. The drive unit 10 may include a chain drive mechanism and a belt drive mechanism as the power transmission mechanism. In other words, the bicycle 1 may include a chain and a belt instead of the second transmission shaft 27.

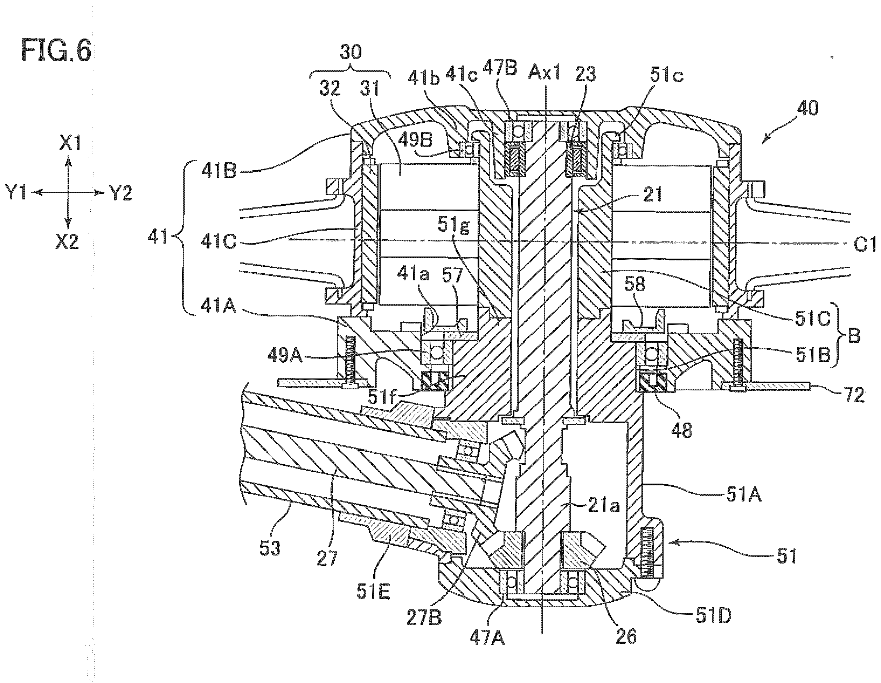

The first transmission shaft 21 is coupled to the rear hub 41. In detail, the first transmission shaft 21 is coupled to the rear hub 41 through a one-way clutch 23 (see FIG. 6). The one-way clutch 23 transmits the rotational force of the first transmission shaft 21 to the rear hub 41, but does not transmit the rotational force of the rear hub 41 to the first transmission shaft 21. The supporting structure of the first transmission shaft 21 and the location of the one-way clutch 23 will be described later in detail.

### [Rear part of rear arm and shaft case]

The rear arm 50 is disposed either rightward or leftward of the rear wheel 40 and the electric motor 30, and not disposed on the other. In the exampled drive unit 10, as shown in FIG. 5, there is a rear arm 50 on the left side of the rear wheel 40, and there is no rear arm on the right side. As such, a maintenance operator can easily access the rear wheel 40 and the electric motor 30, and this improves the workability of the maintenance operation. For example, the operator can easily detach a right wall 41B of the rear hub 41. In contrast to the exampled bicycle 1, the rear arm 50 may be disposed only rightward of the rear wheel 40.

The power transmission mechanism that transmits the rotation of the crank shaft 61 to the first transmission shaft 21 is disposed together with the rear arm 50 leftward of the rear wheel 40 and the electric motor 30. In other words, the second transmission shaft 27 is disposed on the same side as the rear arm 50 with respect to the center C1 of the rear wheel 40 in the left-right direction. Accordingly, the power transmission mechanism is coupled to the left part of the first transmission shaft 21. The stator 31 is supported by the rear part 51 (hereinafter referred to as arm rear part) of the rear arm 50. The arm rear part 51 is located leftward of the stator 31. The first transmission shaft 21 extends rightward from the arm rear part 51 side, and is disposed radially inward of the stator 31. The first transmission shaft 21 is coupled to the rear hub 41, on the opposite side (i.e., on the right) to the power transmission mechanism and the rear arm 50 across the center C1 of the electric motor 30 in the left-right direction. In other words, the first transmission shaft 21 is coupled to the right wall 41B (see FIG. 6) of the rear hub 41. This structure allows the rear arm 50 located only leftward to support the electric motor 30 and the power transmission from the crank shaft 61 to the rear hub 41.

As shown in FIG. 5, the front part of the rear arm 50 includes the front housing 56 holding the crank 60. The rear arm 50 includes the shaft case 53 formed like a tube and extending from the front housing 56 rearward. The second transmission shaft 27 is accommodated in the shaft case 53, and rotatably held by a bearing provided to the shaft case 53. The gear 27A at the front end of the second transmission shaft 27 is located inside the front housing 56. The gear 27B at the rear end of the second transmission shaft 27 is accommodated in a housing 51A of the arm rear part 51 described later.

As shown in FIG. 5, the housing 51A is located leftward away from the center C1 of the rear wheel 40 in the left-right direction (that is, the center of the vehicle in the left-right direction). The shaft case 53 extends obliquely frontward from the housing 51A toward the center C1. The front end of the shaft case 53 is located in front of the rear wheel 40 or the electric motor 30.

As described above, the bicycle 1 may employ a chain drive mechanism or a belt drive mechanism as the power transmission mechanism. In this case, the rear arm 50 may include a case instead of the shaft case 53 so as to accommodate the chain or the belt. In still another example, the bicycle 1 may not include a case for accommodating the power transmission mechanism.

The arm rear part 51 of the rear arm 50 is connected to the rear end of the shaft case 53 (see FIG. 5). As shown in FIG. 6, the arm rear part 51 includes the housing 51A described above. The housing 51A is connected to the rear end of the shaft case 53. In the exampled drive unit 10, the arm rear part 51 includes a front cover 51E that has an opening, to which the rear end of the shaft case 53 is fitted, and is fixed to the rear end of the shaft case 53. The housing 51A is fixed to the front cover 51E by a fixture such as a screw, thereby forming an accommodation part for accommodating the gears 27B and 26. The housing 51A can protect the power transmission mechanism (specifically, gears 27B and 26). The structure for connecting the arm rear part 51 to the shaft case 53 is not limited to the example of the bicycle 1, and may be varied as appropriate.

### [Supporting shaft formed on rear arm]

As shown in FIG. 6, the drive unit 10 includes a supporting shaft B that supports the electric motor 30 and the rear wheel 40. The supporting shaft B extends rightward from the arm rear part 51. The supporting shaft B is a tube-like member arranged along the rotation center Ax1 of the rear wheel 40 and the electric motor 30, and is not rotatable. The first transmission shaft 21, which transmits the rotational force of the crank shaft 61 to the rear hub 41, is disposed inside the supporting shaft B. The supporting shaft B supports the rear hub 41 through the bearings 49A and 49B, and thus allows rotation of the rear wheel 40. The layout of the bearings 49A and 49B will be described later in detail.

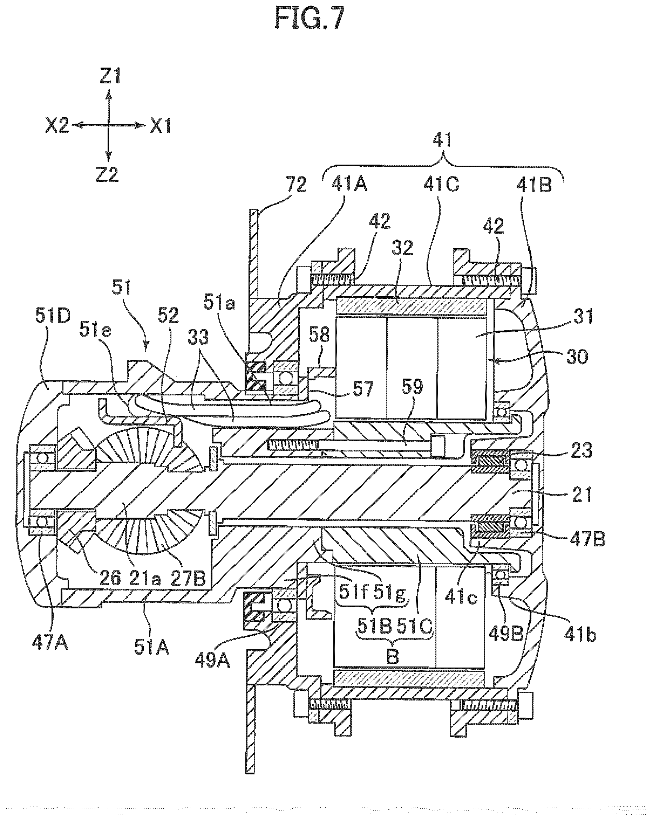

In the exampled drive unit 10, the supporting shaft B is composed of two members fixed to each other. Specifically, as shown in FIG. 6, the supporting shaft B includes a shaft body 51B and a connected shaft 51C. Each of the shaft body 51B and the connected shaft 51C is a tube-like members, and those are fixed to each other in the axial direction. In other words, the supporting shaft B can be divided in the axial direction. The stator 31 of the electric motor 30 is fixed to the outer peripheral surface of the connected shaft 51C. For example, the iron cores constituting the stator 31 are welded or bonded to the outer peripheral surface of the connected shaft 51C. As such, the connected shaft 51C is employed as a holder for the stator 31. The shaft body 51B is integrally formed with the housing 51A. The connected shaft 51C is located rightward of the shaft body 51B, and fixed to the shaft body 51B by a fixture, such as a screw 59 (see FIG. 7) and a bolt. In the exampled bicycle 1, the screw 59 is located radially inward of the stator 31. The supporting shaft B is constituted by two members (that is, the shaft body 51B and the connected shaft 51C) in this way, and this enhances ease of assembly of the drive unit 10. For example, in the assembly process of the drive unit 10, it is possible to fix the stator 31 to the outer peripheral surface of the connected shaft 51C, and then connect the connected shaft 51C to the shaft body 51B using the screw 59.

The configuration of the supporting shaft B is not limited to the example of the drive unit 10. The shaft body 51B and the connected shaft 51C of the supporting shaft B may be integrally formed. In this case, a stator may be fitted outside of the supporting shaft B, and the inner periphery of the stator may be fixed to the outer peripheral surface of the supporting shaft B. In still another example, the shaft body 51B and the housing 51A may be separately formed. The shaft body 51B and the housing 51A may be fixed to each other by a fixture, such as a screw.

### [Rear hub and its supporting structure]

As shown in FIG. 6, the rear hub 41 includes a right wall 41B and a left wall 41A. The right wall 41B is located rightward of the center C1 (center of the electric motor 30) of the rear wheel 40 in the left-right direction, and covers the right side of the electric motor 30. The left wall 41A is located leftward of the center C1 of the rear wheel 40, and covers the left side of the electric motor 30. In the exampled bicycle 1, the rear hub 41 includes a middle wall 41C formed into a cylindrical shape and located between the right wall 41B and the left wall 41A. The middle wall 41C covers the outer peripheral surface of the electric motor 30. The rotor (magnet) 32 described above is fixed to the inner surface of the middle wall 41C. As shown in FIG. 7, the outer circumference of the right wall 41B is fixed to the middle wall 41C by a fixture, such as a screw 42 or a bolt. Similarly, the outer circumference of the left wall 41A is fixed to the middle wall 41C by a fixture, such as a screw 42 or a bolt.

The configuration of the rear hub 41 is not limited to the example of the bicycle 1. The rear hub 41 may be formed of two members. For example, the left wall 41A (or the right wall 41B) and the middle wall 41C may be integrally formed.

As shown in FIG. 6, an opening 41a that opens in the axial direction is formed on the left wall 41A. The supporting shaft B and the first transmission shaft 21 are disposed inside of the opening 41a. That is, the supporting shaft B and the first transmission shaft 21 extend through the opening 41a from the inside of the rear hub 41 to the outside of the rear hub 41. In the exampled bicycle 1, the rear arm 50 is disposed only leftward of the rear wheel 40. As such, unlike the left wall 41A, the right wall 41B of the rear hub 41 does not have an opening through which the supporting shaft B and the first transmission shaft 21 are routed.

The rear hub 41 is supported through a left bearing 49A and a right bearing 49B, which are spaced apart from each other in the left-right direction. The two bearings 49A and 49B are opposed to each other in the left-right direction across the center C1 of the rear wheel 40. As shown in FIG. 6, the left bearing 49A is disposed between the inner peripheral surface of the opening 41a of the left wall 41A and the outer peripheral surface of the supporting shaft B (more specifically, shaft body 51B). The right bearing 49B is disposed between the right wall 41B of the rear hub 41 and the outer peripheral surface of the supporting shaft B (more specifically, connected shaft 51C). Specifically, a supported portion 41b projecting in the axial direction (leftward in the exampled drive unit 10) is formed on the inner surface of the right wall 41B. The supported portion 41b is annular when viewed in the axial direction. The right bearing 49B is disposed between the inner peripheral surface of the supported portion 41b and the outer peripheral surface of the connected shaft 51C.

As described above, the supporting shaft B supports the rear hub 41 through the bearings 49A and 49B, and allows rotation of the rear hub 41. The structure for supporting the rear hub 41 is not limited to the example of the drive unit 10. For example, in contrast to the example of the drive unit 10, the supported portion 41b of the right wall 41B may be located inside of the end part of the tube-like supporting shaft B. In this case, the right bearing 49B may be disposed between the outer peripheral surface of the supported portion 41b of the right wall 41B and the inner peripheral surface of the supporting shaft B.

Between the two bearings 49A and 49B, the one closer to the rear arm 50 is wider than the other. In the exampled bicycle 1, the width of the left bearing 49A in the axial direction is wider than the width of the right bearing 49B. This increases durability of the supporting structure of the rear hub 41.

As shown in FIG. 6, a seal 48 is disposed between the inner peripheral surface of the opening 41a of the left wall 41Ab and the outer peripheral surface of the supporting shaft B (more specifically, shaft body 51B). The seal 48 is located outwardly from the bearing 49A in the axial direction (in the exampled drive unit 10, leftward).

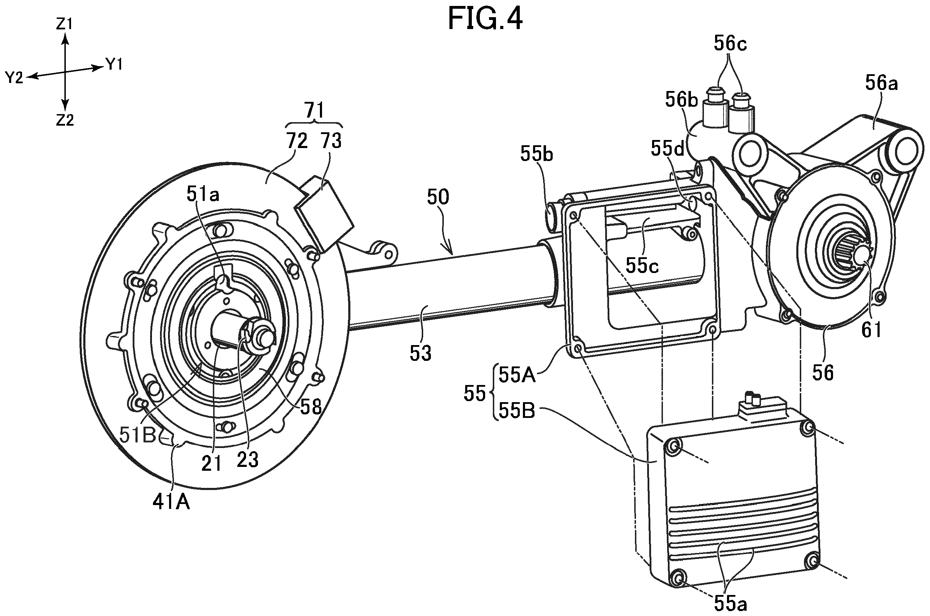

As shown in FIGs. 6 and 7, the shaft body 51B includes a large-diameter part 51f and a small-diameter part 51g, which has a smaller diameter than the large-diameter part 51f. The large-diameter part 51f is located radially inward of the left bearing 49A. In the exampled bicycle 1, a cable passage (through hole) 51a is formed on the large-diameter part 51f, and an electric cable 33 described later is routed through the cable passage 51a (see FIGs. 4 and 7). The small-diameter part 51g is located rightward of the large-diameter part 51f, and fixed to the connected shaft 51C. The connected shaft 51C, to which the stator 31 is fixed, has substantially the same diameter as the small-diameter part 51g. A stopper plate 57 is attached to the side surface of the large-diameter part 51f so as to prevent the left bearing 49A from falling out. Further, a guide plate 58 is attached to the side surface of the large-diameter part 51f so as to guide a position of an electric wire connected to the stator 31.

As shown in FIG. 6, a radially extending flange part 51c is formed at the end of the supporting shaft B (specifically, connected shaft 51C). The flange part 51c prevents the right bearing 49B from moving outward in the axial direction (rightward in the example of the drive unit 10). In the assembly process of the drive unit 10, for example, the right bearing 49B is fitted outside of the connected shaft 51C, and then the stator 31 is fixed to the outer peripheral surface of the connected shaft 51C. Subsequently, the connected shaft 51C is fixed to the shaft body 51B by a fixture, such as the screw 59. The structure for preventing the right bearing 49B from falling out is not limited to the example of the drive unit 10.

### [Brake device]

The bicycle 1 includes a brake device 71 for the rear wheel 40. As shown in FIG. 3, the brake device 71 is, for example, a disc brake device, and thus includes a brake disc 72, which integrally rotates with the rear hub 41, and calipers 73. As shown in FIG. 6, the brake disc 72 is attached to, for example, the left wall 41A. As such, the supporting shaft B and the first transmission shaft 21 are located radially inward of the brake disc 72. The calipers 73 are supported by the rear arm 50. For example, the calipers 73 are supported by the shaft case 53 through the bracket 53a (see FIG. 3). The configuration of the brake device 71 is not limited to the example of the drive unit 10. For example, the brake device 71 may be a drum brake device. In this case, a brake drum may be attached to the left wall 41A.

### [One-way clutch and supporting structure of transmission shaft]

As shown in FIG. 6, the supporting shaft B and the first transmission shaft 21 project leftward from the opening 41a of the rear hub 41. The first transmission shaft 21 extends further leftward than the supporting shaft B, and thus includes a part 21a (hereinafter referred to as connection part) that is located further leftward than the supporting shaft B. The connection part 21a is connected to the second transmission shaft 27. In the exampled drive unit 10, the connection part 21a is connected to the second transmission shaft 27 through the gears 26 and 27B. The gear 26 on the connection part 21a is located further outward (more specifically, leftward) than the gear 27B of the second transmission shaft 27 in the axial direction.

As described above, the first transmission shaft 21 is connected to the rear hub 41, on the opposite side to the rear arm 50 and the power transmission mechanism (in the exampled bicycle 1, second transmission shaft 27 and gears 26 and 27B) across the center C1 of the rear wheel 40 so that power can be transmitted from the first transmission shaft 21 to the rear hub 41. In other words, the first transmission shaft 21 is connected to a wall part opposite to a wall part where the opening 41a is formed (in the example of the drive unit 10, right wall 41B).

In the exampled drive unit 10, the first transmission shaft 21 is connected to the right wall 41B through the one-way clutch 23 which allows power to be transmitted to the rear hub 41 and prevents power transmission in the opposite direction. As shown in FIG. 6, a connection part 41c is formed on the inner surface of the right wall 41B. The connection part 41c projects from the inner surface of the right wall 41B in the axial direction, and is annular when viewed in the axial direction. The connection part 41c is located radially inward of the end of the supporting shaft B (specifically, connected shaft 51C). The end (right end) of the first transmission shaft 21 is located radially inward of the connection part 41c. The one-way clutch 23 is disposed between the inner peripheral surface of the connection part 41c and the outer peripheral surface of the transmission shaft 21.

In this manner, the one-way clutch 23 is located downstream of the second transmission shaft 27 in the power transmission path extending from the crank shaft 61 to the rear hub 41. As such, for example, when the bicycle 1 is running only by the power of the electric motor 30, rotation of the second transmission shaft 27 is not generated. As a result, it is possible to prevent the power of the electric motor 30 from being wasted by the rotation of the second transmission shaft 27. Specifically, in the exampled bicycle 1, the one-way clutch 23 is located downstream of the first transmission shaft 21 in the power transmission path. As such, when the bicycle 1 is running only by the power of the electric motor 30, not only the rotation of second transmission shaft 27 but also the rotation of the first transmission shaft 21 is not generated.

The location of the one-way clutch 23 is not limited to the example of the drive unit 10. For example, the first transmission shaft 21 may be formed of two members that are connected to each other in the axial direction, and the one-way clutch 23 may be disposed between the two members. In still another example, the one-way clutch 23 may be disposed between the first transmission shaft 21 and the gear 26 on the first transmission shaft 21, or between the second transmission shaft 27 and the gear 27B on the second transmission shaft 27.

As described, the supporting shaft B is not rotatable, while the first transmission shaft 21 disposed inside of the supporting shaft B is rotatable. As shown in FIG. 6, the first transmission shaft 21 is rotatably supported through the bearings 47A and 47B that are spaced apart from each other in the left-right direction. In the exampled drive unit 10, the bearings 47A and 47B are respectively disposed at the left end and the right end of the first transmission shaft 21. That is, the first transmission shaft 21 is rotatably supported at the opposite ends thereof. Such placement of the bearings 47A and 47B can improve stability of supporting the first transmission shaft 21. For example, deformation of the first transmission shaft 21 can be effectively prevented compared to the structure of disposing the bearings 47A and 47B at the center of the first transmission shaft 21 and supporting the first transmission shaft 21 by the supporting shaft B.

As shown in FIG. 6, in the exampled drive unit 10, similarly to the one-way clutch 23, the right bearing 47B is disposed between the inner peripheral surface of the connection part 41c of the rear hub 41 and the outer peripheral surface of the first transmission shaft 21. As such, clearance between the inner peripheral surface of the connection part 41c and the outer peripheral surface of the first transmission shaft 21 (clearance in which the one-way clutch 23 is disposed) can be maintained by the bearing 47B with high accuracy. In the exampled drive unit 10, the bearing 47B is located further outward (specifically, rightward) than the one-way clutch 23 in the axial direction.

As shown in FIG. 6, the arm rear part 51 of the rear arm 50 is located outward of the first transmission shaft 21 in the axial direction (leftward in the exampled drive unit 10), and includes a left cover 51D for covering the housing 51A. The left bearing 47A is held inside of the left cover 51D. Specifically, a recess is formed on the inner surface of the left cover 51D, and the bearing 47A is fitted into the recess. As such, the bearing 47A is located further outward than the gear 26 of the first transmission shaft 21 in the axial direction (specifically, leftward). This prevents the first transmission shaft 21 from being deformed, and enables to highly accurately maintain the relative positions of the gear 26 on the first transmission shaft 21 and the gear 27B on the transmission shaft 27.

As described, the left end of the first transmission shaft 21 is supported by the arm rear part 51 through the bearing 47A. The right end of the first transmission shaft 21 is supported by the right wall 41B of the rear hub 41 through the bearing 47B. As described above, the right wall 41B of the rear hub 41 is supported by the supporting shaft B of the rear arm 50, and thus the right end of the first transmission shaft 21 is indirectly supported by the supporting shaft B.

The supporting structure of the first transmission shaft 21 is not limited to the example of the drive unit 10. For example, one or both of the bearings 47A and 47B may be located inside of the supporting shaft B to support the first transmission shaft 21. That is, one or both of the bearings 47A and 47B may be disposed between the inner peripheral surface of the supporting shaft B and the outer peripheral surface of the first transmission shaft 21.

As shown in FIG. 6, a clearance is provided between the inner peripheral surface of the supporting shaft B and the outer peripheral surface of the first transmission shaft 21. As such, friction is not generated between the first transmission shaft 21 and the supporting shaft B, and thus the first transmission shaft 21 can rotate smoothly. As described above, the first transmission shaft 21 includes the connection part 21a that is located further leftward than the supporting shaft B. This connection part 21a is located inside of an accommodation part defined by the housing 51A and the left cover 51D. This structure can prevent external dusts and moisture from entering the interior of the rear hub 41 through the clearance between the inner peripheral surface of the supporting shaft B and the outer peripheral surface of the first transmission shaft 21.

### [Electric cable]

As shown in FIG. 7, the drive unit 10 includes the electric cable 33. The electric cable 33 includes an electric wire connected to the stator 31, and an electric wire connected to an encoder that detects rotational speed of the electric motor 30. The annular guide plate 58 is disposed inside of the rear hub 41 so as to guide the position of the electric cable 33. The electric cable 33 is located between the guide plate 58 and the small-diameter part 51g of the supporting shaft B (shaft body 51B). The electric cable 33 is routed radially inward of the left bearing 49A, and extends from inside to outside of the rear hub 41. This configuration allows the electric cable 33 to extend toward the rear arm 50. The electric cable 33 is arranged along the rear arm 50, and the ends of the electric wire included in the electric cable 33 are connected to the motor driver 12 and/or the vehicle controller 11 (see FIG. 2).

As shown in FIG. 7, the cable passage 51a, through which the electric cable 33 is routed, is formed on the supporting shaft B. The cable passage 51a allows communication between the interior of the rear hub 41 and the interior of the housing 51A. That is, the cable passage 51a is not in communication with the exterior of the vehicle, but in communication with the interior of the housing 51A. This prevents external dusts and moisture from entering the interior of the rear hub 41 through the cable passage 51a.

As shown in FIG. 7, the supporting shaft B includes a hole penetrating the supporting shaft B in the axial direction. This through hole functions as the cable passage 51a. As described above, the supporting shaft B includes the shaft body 51B and the connected shaft 51C that are connected to each other in the axial direction. The large-diameter part 51f of the shaft body 51B has a diameter larger than the small-diameter part 51g and the connected shaft 51C, and the right side surface of the shaft body 51B is exposed inside the rear hub 41. The cable passage 51a is formed on the right side surface of the shaft body 51B. The cable passage 51a is disposed above the first transmission shaft 21, for example.

The configuration of the cable passage 51a is not limited to the example of the drive unit 10. For example, a groove may be formed on the outer peripheral surface of the supporting shaft B (specifically, on the outer peripheral surface of large-diameter part 51f of shaft body 51B). Such a groove may be used as the cable passage 51a. In this case as well, the electric cable 33 is disposed radially inside the left bearing 49A. In still another example, an annular member (collar) may be disposed radially between the outer peripheral surface of the shaft body 51B and the left bearing 49A. A through hole may be formed on the annular member to function as the cable passage 51a.

In the exampled drive unit 10, the electric cable 33 is routed through the housing 51A, and, as shown in FIG. 3, extends forward along the rear arm 50 (more specifically, along the shaft case 53). The wall (front cover 51E, see FIG. 3) on the front side of the housing 51A has a through hole 51e (see FIG. 7) penetrating through the wall. The electric cable 33 is routed through the through hole 51e, and extends forward from the interior of the housing 51A. The through hole 51e is located, for example, above the gear 27B of the second transmission shaft 27.

As shown in FIG. 7, a cable guide 52 may be disposed inside the housing 51A. The cable guide 52 guides the position of the electric cable 33 in the interior of the housing 51A. The cable guide 52 is disposed so as to prevent interference between the gears 26 and 27B, which are disposed inside the housing part 51A, and the electric cable 33. Specifically, the cable guide 52 is disposed above and rightward of the gear 26, and above the gear 27B.

### [Auxiliary housing]

As described above, the drive unit 10 includes the motor driver 12 (see FIG. 2) having the inverter and supplying power stored in the battery 13 to the electric motor 30. In the exampled drive unit 10, the motor driver 12 is supported by the rear arm 50. Specifically, as shown in FIGs. 4 and 5, the rear arm 50 includes the auxiliary housing 55, and the auxiliary housing 55 accommodates the motor driver 12. This placement of the motor driver 12 can shorten the length of the power supplying electric wire extending from the battery 13 to the electric motor 30. In the exampled drive unit 10, the auxiliary housing 55 also accommodates the vehicle controller 11, which calculates an instruction value to the motor driver 12.

As shown in FIG. 5, in the exampled drive unit 10, the auxiliary housing 55 is located between the crank shaft 61 and the first transmission shaft 21. The auxiliary housing 55 is disposed in front of the rear wheel 40, and at least a part of the auxiliary housing 55 overlaps with the rear wheel 40 in the front view of the vehicle. The auxiliary housing 55 is located behind the crank shaft 61, and at least a part of the auxiliary housing 55 overlaps with the crank shaft 61 in the front view of the vehicle. The placement of the auxiliary housing 55 can prevent an external object from colliding with the auxiliary housing 55.

As shown in FIG. 4, the auxiliary housing 55 includes a left housing 55A and a right housing 55B that are combined with each other in the left-right direction. The left housing 55A has a box-like shape with the right side open, and the right housing 55B has a box-like shape with the left side open. The left housing 55A is attached to the rear arm 50. In the exampled drive unit 10, the shaft case 53 penetrates the left housing 55A in the front-rear direction. The front housing 56 is disposed in front of the left housing 55A, and the left housing 55A is fixed to the front housing 56. The motor driver 12 and the vehicle controller 11 are attached to the interior of the right housing 55B. Cooling fins 55a may be formed on the outer surface of the right housing 55B.

The position of the auxiliary housing 55 and the structure of attaching the auxiliary housing 55 to the rear arm 50 are not limited to the examples of the drive unit 10. For example, the right housing 55B may be attached to the shaft case 53, and the left housing 55A may be attached to the right housing 55B. In this case, the motor driver 12 and the vehicle controller 11 may be fixed to the left housing 55A. In still another example, the auxiliary housing 55 may be formed of two members that are combined with each other in the front-rear direction. In still another example, the auxiliary housing 55 may be attached to the outer surface of the shaft case 53. In still another example, the electric cable 33 may be routed through the interior of the shaft case 53.

As shown in FIG. 4, the auxiliary housing 55 has an opening 55b (hereinafter referred to as "cable opening") located above shaft case 53. The electric cable 33 enters into the auxiliary housing 55 through the cable opening 55b. In the exampled drive unit 10, the cable opening 55b is formed on the left housing 55A, and the electric cable 33 is located above the shaft case 53. This prevents interference between the electric cable 33 and the rear wheel 40 and between the electric cable 33 and an obstacle on the path of the bicycle 1. The electric cable 33 enters from the cable opening 55b into the auxiliary housing 55, curves rightward, and extends to the motor driver 12 described above. The auxiliary housing 55 includes a guide wall 55c therein to prevent interference between the electric cable 33 and the shaft case 53.

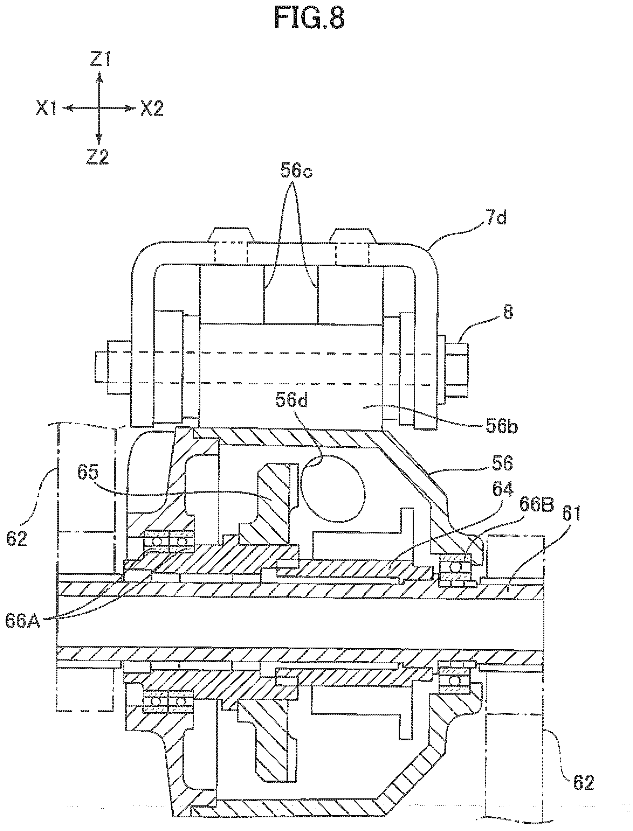

As shown in FIG. 4, a through hole 55d is formed on a wall in front of the auxiliary housing 55. The auxiliary housing 55 is in communication with the interior of the front housing 56 through the through hole 55d and a through hole 56d (see FIG. 8) formed on the front housing 56. The electric wire connected to the pedal force sensor 64 is connected to the vehicle controller 11 inside the auxiliary housing 55 though the through holes 55d and 56d.

### [Front part of rear arm]

As shown in FIG. 4, the front part of the rear arm 50 includes the front housing 56 accommodating the gear 65 and the pedal force sensor 64, for example. The front housing 56 supports the crank shaft 61 through the bearings 66A and 66B, and allows rotation of the crank shaft 61. The opposite ends of the crank shaft 61 project from the front housing 56 in the axial direction. The pedals 63 are respectively fixed to the opposite ends of the crank shaft 61. The front housing 56 accommodates the gear 65 and the pedal force sensor 64 that are disposed on the crank shaft 61 (see FIG. 5).

The front housing 56 is attached to the bracket 7d (see FIG. 1) that is provided to the lowest part of the vehicle frame 7. The bracket 7d is a box-like member with the bottom side open, for example. The front housing 56 is disposed inside the bracket 7d, and attached to the bracket 7d. As shown in FIG. 4, the front housing 56 includes a front connection part 56a and a rear connection part 56b, which extend upward and are apart from each other in the front-rear direction. For example, a fixture 8 (specifically, bolt, see FIG. 8) is inserted into the connection parts 56a and 56b and the bracket 7d in the left-right direction, and thus the connection parts 56a and 56b are fixed to the bracket 7d.

The front housing 56 may be attached to the bracket 7d through a damper. In the exampled bicycle 1, a damper 56c is attached to the rear connection part 56b ,and is vertically sandwiched by the rear connection part 56b and the bracket 7d. The connection part 56b is attached to the bracket 7d so as to be slightly and vertically movable to the bracket 7d. As such, when the bicycle 1 swings, the rear arm 50 is vertically movable around the fixture (specifically, bolt) inserted into the front connection part 56a, and the damper 56c dampens the vertical movement of the rear arm 50. The structures of attaching the front housing 56 to the vehicle frame 7 may not be limited to the example of the drive unit 10, but may be varied as appropriate.

### [Conclusion]

(1) As described above, the drive unit 10 includes the rear hub 41 provided on the rear wheel 40, the rear arm 50, the first power system, and the second power system. The first power system includes the electric motor 30 that includes the rotor 32, which is rotatable around the rotation center Ax1 of the rear wheel 40, and the stator 31 and is accommodated in the rear hub 41. The first power system transmits rotation of the rotor 32 to the rear hub 41. The second power system includes the crank shaft 61 to which the pedals 63 are attached, and transmits rotation of the crank shaft 61 to the rear hub 41. The second power system includes the first transmission shaft 21 and the power transmission mechanism, and transmits rotation of the crank shaft 61 to the rear hub 41 through the power transmission mechanism and the first transmission shaft 21. The first transmission shaft 21 is rotatable and disposed radially inward of the stator 31, and the power transmission mechanism couples the crank shaft 61 to the first transmission shaft 21. The rear arm 50 and the power transmission mechanism are disposed leftward of the center C1 of the rear wheel 40 in the left-right direction, and the transmission shaft 21 is coupled to the rear hub 41 at a position rightward of the center C1 of the rear wheel 40 in the left-right direction. According to the drive unit 10, the rear hub 41 can be supported by the rear arm 50 disposed leftward of the rear wheel 40, and thus a maintenance operator can easily access the electric motor, for example. This improves the workability of the maintenance operation.
(2) The drive unit 10 includes the tube-like supporting shaft extending rightward from the rear part of the rear arm 50. The first transmission shaft 21 is disposed radially inward of the supporting shaft, and the stator 31 is fixed to radially outward of the supporting shaft B. In this manner, the stator 31 can be supported with a simple structure.
(3) The rear hub 41 includes the left wall 41A located leftward of the center C1 of the rear wheel 40 in the left-right direction, and the right wall 41B located rightward of the center C1 of the rear wheel 40 in the left-right direction. The transmission shaft 21 enters the interior of the rear hub 41 through the opening 41a formed on the left wall 41A, extends rightward, and is coupled to the right wall 41B.
(4) The rear hub 41 is rotatably supported by the supporting shaft B. In this manner, the rear hub 41 can be supported with a simple structure.
(5) Specifically, the left bearing 49A is fitted to radially outward of the supporting shaft B, and the left wall 41A of the rear hub 41 is rotatably supported by the left bearing 49A.
(6) The right bearing 49B is disposed on the opposite side to the left bearing 49A across the center C1 of the electric motor 30 in the left-right direction. The right wall 41B of the rear hub 41 may be rotatably supported by the right bearing 49B.
(7) The one-way clutch 23 is disposed in the power transmission path from the crank shaft 61 to the rear hub 41. The one-way clutch 23 allows transmission of rotational force from the crank shaft 61 to the rear hub 41, and prevents transmission of rotational force from the rear hub 41 to the crank shaft 61. This can prevent the crank shaft 61 from rotating when the bicycle is running only by power of the electric motor 30. As a result, it is possible to reduce loss of power of the electric motor 30.
(8) The one-way clutch 23 is disposed downstream of the power transmission mechanisms (65, 27, 26) that transmit power from the crank shaft 61 to the first transmission shaft 21. This can prevent the power transmission mechanism from moving when the bicycle is running only by power of the electric motor 30. As a result, it is possible to further reduce loss of power of the electric motor 30.
(9) The one-way clutch 23 is disposed between the first transmission shaft 21 and the rear hub 41. This can prevent the first transmission shaft 21 from rotating when the bicycle is running only by power of the electric motor 30. As a result, it is possible to further reduce loss of power of the electric motor 30.
(10) The electric cable 33 connected to the stator 31 is routed radially inward of the left bearing 49A. This configuration allows the electric cable 33 to extend toward the rear arm 50.
(11) The cable passage 51a, through which the electric cable 33 is routed, is formed on the supporting shaft B.
   The first transmission shaft 21 includes the part 21a (connection part) that further projects leftward than the supporting shaft B, and the power transmission mechanism is coupled to the connection part 21a of the first transmission shaft 21.
(12) The first transmission shaft 21 is rotatably supported at the opposite ends thereof. Specifically, the connection part 21a of the first transmission shaft 21 is supported by the rear arm 50 through the bearing 47A, and the right wall 41B of the rear hub 41 holds the bearing 47B supporting the first transmission shaft 21. This structure can effectively prevent the first transmission shaft 21 from being deformed compared to a structure in which the bearing for supporting the first transmission shaft 21 is disposed inside the supporting shaft B.
(13) The power transmission mechanism includes the second transmission shaft 27 that transmits power from the crank shaft 61 to the first transmission shaft 21. The power transmission mechanism is accommodated in the rear arm 50.
(14) The drive unit 10 includes the motor driver 12 that supplies electric current to the electric motor 30. The motor driver 12 is supported by the rear arm 50. This can shorten the length of the electric wire that supplies power to the electric motor 30.

### [Examples including chain drive mechanism]

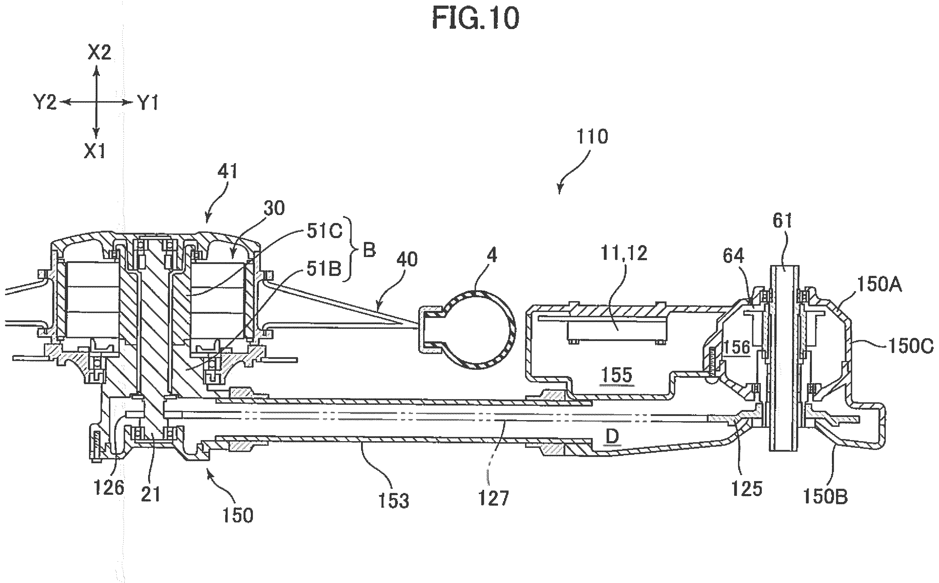

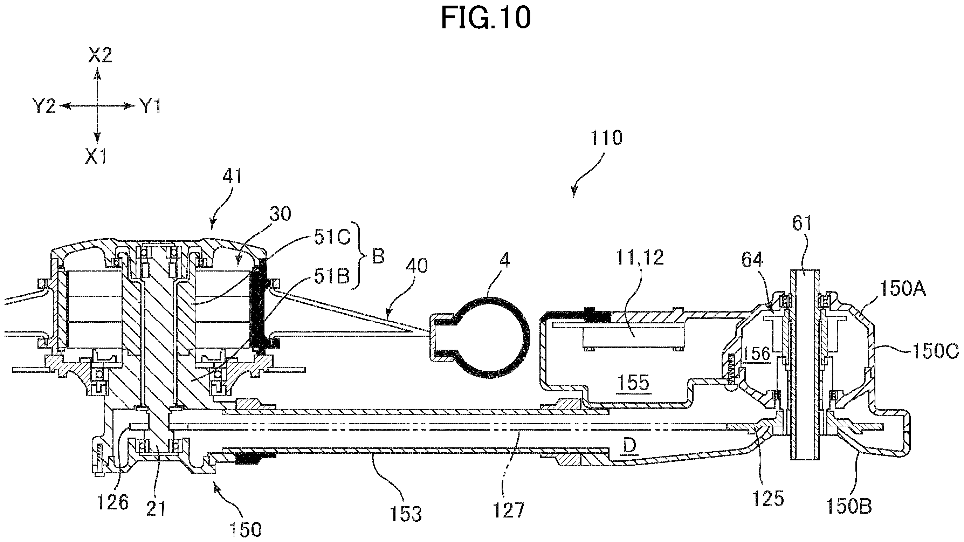

The drive unit and the bicycle proposed in this disclosure are not limited to the examples of the drive unit 10 and the bicycle 1 described above. FIG. 9 is a diagram showing an example of the drive unit including a chain drive mechanism as a power transmission mechanism for transmitting rotational force from the crank shaft 61 to the first transmission shaft 21. FIG. 10 is a cross sectional view of the drive unit taken along the line X-X in FIG. 9.

In these drawings, the elements identical or similar to those shown previously are denoted by the same reference signs as the previously shown elements. In the following, differences between a drive unit 110 and the drive unit 10 will be mainly described. Items not described regarding the drive unit 110 are the same or substantially the same as those of the drive unit 10.

As shown in FIG. 10, the drive unit 110 includes, as the power transmission mechanism, a sprocket 125 disposed on the crank shaft 61, a sprocket 126 disposed on the transmission shaft 21, and a transmission chain 127 engaged by the sprocket 125 and the sprocket 126. The drive unit 110 may include a tension mechanism 129 (see FIG. 9) that prevents deformation of the transmission chain 127. Unlike the drive unit 10 shown in FIG. 5, for example, a rear arm 150 and the transmission chain 127 are disposed rightward of the rear wheel 40 in the drive unit 110. The supporting shaft B includes the shaft body 51B and the connected shaft 51C. In the drive unit 110, the shaft body 51B is disposed rightward of the connected shaft 51C, and fixed to the connected shaft 51C.

Similarly to the rear arm 50, the rear arm 150 includes an arm rear part 151 including the supporting shaft B, a front housing 156 accommodating the pedal force sensor 64, and an auxiliary housing 155 accommodating the motor driver 12 and the vehicle controller 11. The rear arm 150 includes a chain accommodation part D accommodating the transmission chain 127. The front part of the chain accommodation part D, the front housing 156, and the auxiliary housing 155 are formed by three members that are coupled together in the left-right direction. That is, the front part of the rear arm 150 includes a left cover 150A, a right cover 150B, and a partition plate 150C. The front housing 156 and the auxiliary housing 155 are defined by the left cover 150A and the partition plate 150C. The motor driver 12 and the vehicle controller 11 are fixed to the left cover 150B. The front part of the chain accommodation part D is defined by the right cover 150B and the partition plate 150C. The rear arm 150 includes a tube-like chain case 153 for connecting the housing 151A of the arm rear part 151 to the front part of the rear arm 150 and forming the chain accommodation part D.

### [Other examples]

The drive unit 110 may use a belt drive mechanism as the power transmission mechanism. That is, the drive unit 110 may include a pulley fixed to the crank shaft 61, a pulley fixed to the transmission shaft 21, and a belt engaged by these two pulleys.

In still another example, the bicycle may have only the assisted mode and the human-powered mode, and not have the electric mode in which the bicycle runs only by power of the electric motor 30. In this case, the bicycle may not have the accelerator grip 4a and the accelerator sensor 4b.

In still another example, the rear hub 41 may not include the left wall 41A. In this case, the middle wall 41C may be supported by the left bearing 49A.

Although the present invention has been illustrated and described herein with reference to embodiments and specific examples thereof, it will be readily apparent to those of ordinary skill in the art that other embodiments and examples may perform similar functions and/or achieve like results. All such equivalent embodiments and examples are within the scope of the present invention, which is defined by the appended claims, are contemplated thereby, and are intended to be covered by the claims.

## Claims

1. A drive unit (10) comprising:
a rear hub (41) provided to a rear wheel (40);
a rear arm (50);
a first power system including an electric motor (30), the electric motor (30) being accommodated in the rear wheel (40) and including a rotor (32) and a stator (31), the first power system being configured to transmit rotation of the rotor (32) to the rear hub (41); and
a second power system including a crank shaft (61) having pedals (63) attached thereto, and configured to transmit rotation of the crank shaft (61) to the rear hub (41),
wherein
the second power system includes a power transmission mechanism (27, 26), the second power system being configured to transmit the rotation of the crank shaft (61) to the rear hub (41) through the power transmission mechanism (27, 26),
the rear arm (50) and the power transmission mechanism (27, 26) are disposed in a first direction, which is one of a rightward direction and a leftward direction, with respect to a center (C1) of the rear wheel (40) in a left-right direction,
**characterized in that**
the second power system includes a transmission shaft (21) and the power transmission mechanism (27, 26), the transmission shaft (21) being rotatable and disposed radially inward of the stator (31), the power transmission mechanism (27, 26) coupling the crank shaft (61) to the transmission shaft (21), the second power system being configured to transmit the rotation of the crank shaft (61) to the rear hub (41) through the power transmission mechanism (27, 26) and the transmission shaft (21), wherein the transmission shaft (21) is coupled to the rear hub (41) at a position in a second direction, which is a direction opposite to the first direction, with respect to the center (C1) of the rear wheel (40) in the left-right direction.

2. The drive unit (10) according to claim 1, **characterized by** a supporting shaft (B) formed like a tube extending from a rear part of the rear arm (50) in the second direction, wherein the transmission shaft (21) is disposed radially inward of the supporting shaft (B), and the stator (31) is fixed to radially outward of the supporting shaft (B).

3. The drive unit (10) according to claim 2, **characterized in that** the rear hub (41) includes a first wall (41A) located in the first direction and a second wall (41B) located in the second direction, and
the transmission shaft (21) and the supporting shaft (B) extend in the second direction through an opening (41a) formed on the first wall (41A) and are coupled to the second wall (41B).

4. The drive unit (10) according to claim 2, **characterized in that** the rear hub (41) is rotatably supported by the supporting shaft (B).

5. The drive unit (10) according to claim 4, **characterized in that** first bearings (49A, 49B) are fitted to radially outward of the supporting shaft (B), and
the rear hub (41) is rotatably supported by the supporting shaft (B) through the first bearings (49A, 49B).

6. The drive unit (10) according to claim 5, **characterized in that** the first bearing (49A) is located in the first direction with respect to the center (C1) of the rear wheel (40),
the second bearing (49B) is located in the second direction with respect to the center (C1) of the rear wheel (40), and
the rear hub (41) is rotatably supported by the supporting shaft (B) through the second bearing (49B).

7. The drive unit (10) according to any one of claims 1 to 6, **characterized in that** a one-way clutch (23) is disposed in the power transmission path extending from the crank shaft (61) to the rear hub (41), the one-way clutch (23) allowing transmission of rotational force from the crank shaft (61) to the rear hub (41) and preventing transmission of rotational force from the rear hub (41) to the crank shaft (61).

8. The drive unit (10) according to claim 7, **characterized in that** the one-way clutch (23) is disposed downstream of the power transmission mechanism (27, 26).

9. The drive unit (10) according to claim 7, **characterized in that** the one-way clutch (23) is disposed between the transmission shaft (21) and the rear hub (41).

10. The drive unit (10) according to claim 5, **characterized in that** an electric wire connected to the stator (31) is routed radially inward of the first bearing (49A).

11. The drive unit (10) according to any one of claims 2 to 6, **characterized in that** a path (51a) through which the electric wire connected to the stator (31) is routed is formed on the supporting shaft (B).

12. The drive unit (10) according to any one of claims 1 to 11, **characterized in that** the transmission shaft (21) is rotatably supported at opposite ends.

13. The drive unit (10) according to any one of claims 1 to 12, **characterized in that** the transmission shaft (21) is a first transmission shaft, and
the power transmission mechanism (27, 26) includes a second transmission shaft (27) that transmits power from the crank shaft (61) to the first transmission shaft (21).

14. The drive unit (10) according to any one of claims 1 to 13, **characterized by** a motor driver (12) that supplies electric current to the electric motor (30), wherein
the motor driver (12) is supported by the rear arm (50).

15. A bicycle (1) comprising the drive unit (10) according to any one of claims 1 to 14.

## Patentansprüche

1. Eine Antriebs-Einheit (10), die umfasst:
eine hintere Nabe (41), die an einem Hinter-Rad (40) vorgesehen ist;
einen hinteren Arm (50);
ein erstes Leistungs-System, das einen Elektro-Motor (30) enthält, der Elektro-Motor (30) in dem Hinter-Rad (40) untergebracht ist und einen Rotor (32) und einen Stator (31) enthält, das erste Leistungs-System konfiguriert ist, um Drehung des Rotors (32) auf die hintere Nabe (41) zu übertragen; und
ein zweites Leistungs-System, das eine Kurbel-Welle (61) hat, mit Pedalen (63), die daran befestigt sind, und konfiguriert ist, um die Drehung der Kurbel-Welle (61) auf die hintere Nabe (41) zu übertragen,
wobei
das zweite Leistungs-System einen Leistungs-Übertragungs-Mechanismus (27, 26) enthält, das zweite Leistungs-System ist konfiguriert, um die Drehung der Kurbel-Welle (61) über den Leistungs-Übertragungs-Mechanismus (27, 26) auf die hintere Nabe (41) zu übertragen,
der hintere Arm (50) und der Leistungs-Übertragungs-Mechanismus (27, 26) sind in einer ersten Richtung positioniert, die eine von einer rechten Richtung und einer linken Richtung ist, in Bezug auf ein Zentrum (C1) des Hinter-Rades (40) in einer Links-Rechts-Richtung,
**dadurch gekennzeichnet, dass**
das zweite Leistungs-System eine Übertragungs-Welle (21) und den Leistungs-Übertragungs-Mechanismus (27, 26) beinhaltet, die Übertragungs-Welle (21) drehbar ist und radial innerhalb des Stators (31) angeordnet ist, der Leistungs-Übertragungs-Mechanismus (27, 26) die Kurbel-Welle (61) mit der Übertragungs-Welle (21) koppelt, das zweite Leistungs-System konfiguriert ist, um die Drehung der Kurbel-Welle (61) über den Leistungs-Übertragungs-Mechanismus (27, 26) und die Übertragungs-Welle (21) auf die hintere Nabe (41) zu übertragen, wobei die Übertragungs-Welle (21) mit der hinteren Nabe (41) an einer Position in einer zweiten Richtung gekoppelt ist, die eine der ersten Richtung entgegengesetzte Richtung ist, in Bezug auf die Mitte (C1) des Hinter-Rads (40) in der Links-Rechts-Richtung.

2. Die Antriebs-Einheit (10) gemäß Anspruch 1, **gekennzeichnet durch** eine Lagerungs-Welle (B), die wie ein Rohr ausgebildet ist, das sich von einem hinteren Teil des hinteren Arms (50) in die zweite Richtung erstreckt, wobei
die Übertragungs-Welle (21) radial innerhalb der Lagerungs-Welle (B) angeordnet ist, und der Stator (31) radial außen von der Lagerungs-Welle (B) fixiert ist.

3. Die Antriebs-Einheit (10) gemäß Anspruch 2, **dadurch gekennzeichnet, dass** die hintere Nabe (41) eine erste Wand (41A), die in der ersten Richtung liegt, und eine zweite Wand (41B), die in der zweiten Richtung liegt, beinhaltet, und
die Übertragungs-Welle (21) und die Lagerungs-Welle (B) sich in der zweiten Richtung, durch eine Öffnung (41a), die an der ersten Wand (41A) ausgebildet ist erstrecken und mit der zweiten Wand (41B) gekoppelt sind.

4. Die Antriebs-Einheit (10) gemäß Anspruch 2, **dadurch gekennzeichnet, dass** die hintere Nabe (41) drehbar auf der Lagerungs-Welle (B) gelagert ist.

5. Die Antriebs-Einheit (10) gemäß Anspruch 4, **dadurch gekennzeichnet, dass** erste Lager (49A, 49B) radial außen von der Lagerungs-Welle (B) angebracht sind, und die hintere Nabe (41) durch die Lagerungs-Welle (B) über die ersten Lager (49A, 49B) drehbar gelagert ist.

6. Die Antriebs-Einheit (10) gemäß Anspruch 5, **dadurch gekennzeichnet, dass** das erste Lager (49A) in der ersten Richtung in Bezug auf die Mitte (C1) des Hinter-Rades (40) angeordnet ist,
das zweite Lager (49B) in der zweiten Richtung in Bezug auf die Mitte (C1) des Hinter-Rades (40) angeordnet ist, und
die hintere Nabe (41) durch die Lagerungs-Welle (B) durch das zweite Lager (49B) drehbar gelagert ist.

7. Die Antriebs-Einheit (10) gemäß irgendeinem der Ansprüche 1 bis 6, **dadurch gekennzeichnet, dass** eine Einweg-Kupplung (23) in dem Leistungs-ÜbertragungsWeg, der sich von der Kurbel-Welle (61) zur hinteren Nabe (41) erstreckt, angeordnet ist, die Einweg-Kupplung (23) lässt eine Übertragung von Drehkraft von der Kurbel-Welle (61) auf die hintere Nabe (41) zu, und verhindert eine Übertragung von Drehkraft von der hinteren Nabe (41) auf die Kurbel-Welle (61).

8. Die Antriebs-Einheit (10) gemäß Anspruch 7, **dadurch gekennzeichnet, dass** die Einweg-Kupplung (23) stromabwärts des Leistungs-Übertragungs-Mechanismus (27, 26) angeordnet ist.

9. Die Antriebs-Einheit (10) gemäß Anspruch 7, **dadurch gekennzeichnet, dass** die Einweg-Kupplung (23) zwischen der Übertragungs-Welle (21) und der hinteren Nabe (41) angeordnet ist.

10. Die Antriebs-Einheit (10) gemäß Anspruch 5, **dadurch gekennzeichnet, dass** ein Elektro-Kabel, das mit dem Stator (31) verbunden ist, radial nach innen zum ersten Lager (49A) geführt ist.

11. Die Antriebs-Einheit (10) gemäß irgendeinem der Ansprüche 2 bis 6, **dadurch gekennzeichnet, daß** ein Pfad (51a), durch den das Elektro-Kabel, das mit dem Stator (31) verbunden ist, geführt ist, in der Lagerungs-Welle (B) ausgebildet ist.

12. Die Antriebs-Einheit (10) gemäß irgendeinem der Ansprüche 1 bis 11, **dadurch gekennzeichnet, dass** die Übertragungs-Welle (21) an gegenüberliegenden Enden drehbar gelagert ist.

13. Die Antriebs-Einheit (10) gemäß irgendeinem der Ansprüche 1 bis 12, **dadurch gekennzeichnet, dass** die Übertragungs-Welle (21) eine erste Übertragungs-Welle ist, und
der Leistungs-Übertragungs-Mechanismus (27, 26) eine zweite Übertragungs-Welle (27) beinhaltet, die Leistung von der Kurbel-Welle (61) auf die erste Übertragungs-Welle (21) überträgt.

14. Die Antriebs-Einheit (10) gemäß irgendeinem der Ansprüche 1 bis 13, **gekennzeichnet durch** einen Motor-Treiber (12), der den Elektro-Motor (30) mit elektrischem Strom versorgt, wobei
der Motor-Treiber (12) durch den hinteren Arm (50) gelagert ist.

15. Ein Fahrrad (1), das die Antriebs-Einheit (10) gemäß irgendeinem der Ansprüche 1 bis 14 umfasst.

## Revendications

1. Unité d'entraînement (10) comprenant :
un moyeu arrière (41) disposé sur une roue arrière (40),
un bras arrière (50),
un premier système de puissance incluant un moteur électrique (30), le moteur électrique (30) étant logé dans la roue arrière (40) et incluant un rotor (32) et un stator (31), le premier système de puissance étant configuré pour transmettre la rotation du rotor (32) au moyeu arrière (41), et
un second système de puissance incluant un arbre manivelle (61) comportant des pédales (63) fixées à celui-ci, et configuré pour transmettre la rotation de l'arbre manivelle (61) au moyeu arrière (41),
dans lequel
le second système de puissance inclut un mécanisme de transmission de puissance (27, 26), le second système de puissance étant configuré pour transmettre la rotation de l'arbre manivelle (61) au moyeu arrière (41) par l'intermédiaire du mécanisme de transmission de puissance (27, 26),
le bras arrière (50) et le mécanisme de transmission de puissance (27, 26) sont disposés dans une première direction qui est l'une de la direction vers la droite et de la direction vers la gauche, par rapport au centre (C1) de la roue arrière (40) dans la direction gauche droite,
**caractérisée en ce que :**
le second système de puissance inclut un arbre de transmission (21) et le mécanisme de transmission de puissance (27, 26), l'arbre de transmission (21) pouvant tourner et étant disposé radialement à l'intérieur du stator (31), le mécanisme de transmission de puissance (27, 26) couplant l'arbre manivelle (61) a l'arbre de transmission (21), le second système de puissance étant configuré pour transmettre la rotation de l'arbre manivelle (61) au moyeu arrière (41) par l'intermédiaire du mécanisme de transmission de puissance (27, 26) et de l'arbre de transmission (21), où l'arbre de transmission (21) est couplé au moyeu arrière (41) à une position dans une seconde direction qui est la direction opposée à la première direction par rapport au centre (C1) de la roue arrière (40) dans la direction gauche droite.

2. Unité d'entraînement (10) selon la revendication 1, **caractérisée par** un arbre de support (B) formé comme un tube qui s'étend depuis la partie arrière du bras arrière (50) dans la seconde direction, l'arbre de transmission (21) étant disposé radialement vers l'intérieur de l'arbre de support (B), et le stator (31) étant fixé radialement vers l'extérieur de l'arbre de support (B).

3. Unité d'entraînement (10) selon la revendication 2, **caractérisée en ce que** le moyeu arrière (41) inclut une première paroi (41A) située dans la première direction et une seconde paroi (41B) située dans la seconde direction, et
l'arbre de transmission (21) et l'arbre de support (B) s'étendent dans la seconde direction au travers d'une ouverture (41a) formée sur la première paroi (41A), et ils sont accouplés à la seconde paroi (41B).

4. Unité d'entraînement (10) selon la revendication 2, **caractérisée en ce que** le moyeu arrière (41) est soutenu par l'arbre de support (B) tout en pouvant tourner.

5. Unité d'entraînement (10) selon la revendication 4, **caractérisée en ce que** des premiers roulements (49A, 49B) sont ajustés radialement vers l'extérieur de l'arbre de support (B), et
le moyeu arrière (41) est soutenu par l'arbre de support (B) tout en pouvant tourner autour des premiers roulements (49A, 49B).

6. Unité d'entraînement (10) selon la revendication 5, **caractérisée en ce que** le premier roulement (49A) est situé dans la première direction par rapport au centre (C1) de la roue arrière (40),
le second roulement (49B) est situé dans la seconde direction par rapport au centre (C1) de la roue arrière (40), et
le moyeu arrière (41) est soutenu par l'arbre de support (B) tout en pouvant tourner au travers du second roulement (49B) .

7. Unité d'entraînement (10) selon l'une quelconque des revendications 1 à 6, **caractérisée en ce qu'**un embrayage unidirectionnel (23) est disposé dans la ligne de transmission de puissance qui s'étend depuis l'arbre manivelle (61) jusqu'au moyeu arrière (41), l'embrayage unidirectionnel (23) autorisant la transmission de la force de rotation depuis l'arbre manivelle (61) jusqu'au moyeu arrière (41) et interdisant la transmission de la force de rotation depuis le moyeu arrière (41) jusqu'à l'arbre manivelle (61).

8. Unité d'entraînement (10) selon la revendication 7, **caractérisée en ce que** l'embrayage unidirectionnel (23) est disposé en aval du mécanisme de transmission de puissance (27, 26).

9. Unité d'entraînement (10) selon la revendication 7, **caractérisée en ce que** l'embrayage unidirectionnel (23) est disposé entre l'arbre de transmission (21) et le moyeu arrière (41).

10. Unité d'entraînement (10) selon la revendication 5, **caractérisée en ce qu'**un fil électrique, relié au stator (31), est acheminé radialement à l'intérieur du premier roulement (49A).

11. Unité d'entraînement (10) selon l'une quelconque des revendications 2 à 6, **caractérisée en ce qu'**une ligne (51a) au travers de laquelle est acheminé le fil électrique relié au stator (31), est formée sur l'arbre de support (B).

12. Unité d'entraînement (10) selon l'une quelconque des revendications 1 à 11, **caractérisée en ce que** l'arbre de transmission (21) est supporté à des extrémités opposées tout en pouvant tourner.

13. Unité d'entraînement (10) selon l'une quelconque des revendications 1 à 12, **caractérisée en ce que** l'arbre de transmission (21) est un premier arbre de transmission, et
le mécanisme de transmission de puissance (27, 26) inclut un second arbre de transmission (27) qui transmet la puissance depuis l'arbre manivelle (61) jusqu'au premier arbre de transmission (21).

14. Unité d'entraînement (10) selon l'une quelconque des revendications 1 à 13, **caractérisée par** un dispositif d'attaque de moteur (12) qui fournit du courant électrique au moteur électrique (30), le dispositif d'attaque de moteur (12) étant supporté par le bras arrière (50).

15. Bicyclette (1) comprenant l'unité d'entraînement (10) conforme à l'une quelconque des revendications 1 à 14.
